# EUROPEAN PATENT APPLICATION

(11) **EP 1 932 679 A1**
(43) Date of publication of application: **18.06.2008**
(21) Application number: 07024313.4
(22) Date of filing: 14.12.2007
(51) Int. Cl.: B42D 15/00, B42D 15/10

(54) **An article with micro indicia security enhancement**

(30) Priority: 15.12.2006 US 875041 P
(71) Applicant: JDS Uniphase Corporation, Milpitas, CA 95035 (US)
(72) Inventor: Argoita, Alberto, Santa Rosa 95405 California (US); Teitelbaum, Neil, Ontario K1S5C4 (CA)
(74) Representative: Adam, Holger

(57) **Abstract**

The invention provides an article having an enhanced security feature provided by association of first indicia imaged directly on a substrate or an additional layer supported thereby, and second indicia imaged on flakes within or supported by the substrate. At least the second indicia are discernible only with magnification.

## Description

### CROSS-REFERENCE TO RELATED APPLICATIONS

The present invention claims priority from U.S. Patent Application No. 60/875,041 filed December 15, 2006, which is incorporated herein by reference.

### TECHNICAL FIELD

The present invention relates to optical devices, to methods for fabricating such devices, and to articles incorporating such devices. The invention also extends to methods of authenticating articles, documents, etc. using such devices.

### BACKGROUND OF THE INVENTION

Various anti-counterfeiting devices have been developed for being printed, stamped, etc, on banknotes, packaging of high-value items, seals for containers, and even for direct application to commercial items.

One anti-counterfeiting approach uses microscopic symbols on layered pigment flakes. The symbols are formed on at least one of the layers of the multi-layer color-shifting pigment flakes by a local change of an optical property(s), such as reflectivity.

U.S. Pat. 7,241,489 teaches opaque flakes formed by deposition of thin film layer(s) on a deposition substrate having an embossed frame, a symbol, and optionally a grating. U.S. Pat. 7,258,915 teaches covert taggent, or taggant, flakes including clear flakes, optically variable flakes, and "silver" taggent flakes, having symbols formed therein or thereon. Optically variable diffractive pigments are described in U.S. Pat. Nos. 5,135,812, 6,692,830, 6,749,777, 6,749,936, 6,815,065, 6,841,238, and 6,902,807.

Flakes for covert security applications are not typically seen by casual observation and require, for example, inspection under a microscope. Sometimes, covert flakes containing indicia, substantially match the visual characteristics of a bulk pigment or other substance they are mixed with, and the percentage of covert pigment flakes is sufficiently small so that the covert pigment flakes are not easily found, even under microscopic examination. For example, if an ink composition has covert pigment flakes making up less than 1% of the total weight of pigment or, for example, if the covert pigment (even at higher concentrations >1%) has an optical design similar to the rest of the pigments that form the ink composition.

Another anti-counterfeiting approach uses Chromagrams - optical structures that have a patterned or windowed substrate together with special effect coatings or layers supported by or supporting the patterned or windowed substrate. Chromagrams of various designs are described in United States Patent 7,224,528 and in US Patent Application publication nos. 20060285184 and 20070206249, all in the name of Phillips et al.

U.S. Pat. No. 6,987,590 in the name of Phillips et al., discloses an optical device that includes a light transmissive substrate having a surface relief pattern applied thereon, in the form of a hologram, a patterned layer of a reflective material is applied over portions of the surface relief pattern so as to form alphanumeric characters, bars codes, or pictorial or graphical designs. An optically active coating is deposited or applied as an ink or paint over the patterned layer of reflective material and exposed portions of the surface relief pattern in order to provide desirable optical effects to the exposed portions of the surface relief pattern. United States Patent Application no. 20060077496 in the name of Argoitia et al., teaches a Chromagram exhibiting a pattern such as alphanumeric characters, bar codes, or graphical or pictorial designs, and additional optical effects in the regions around such pattern.

For all intents and purposes, all references described heretofore or hereafter are incorporated herein by reference.

Despite of a number of security features are known in the art, sophistication of counterfeiters constantly grows. Thus security features that are more difficult to counterfeit are desirable; and therefore the object of the present invention is to provide a security device with an enhanced covert feature, easy to manufacture and difficult to discover and counterfeit.

It is also an object of this invention to provide two security features that are connected to one another by a logical association. This provides a system wherein the object can be authenticated.

### SUMMARY OF THE INVENTION

Accordingly, the present invention provides an article comprising: a substrate and one or more flakes within or supported by the substrate; characterized in that the substrate has first indicia imaged directly thereon or on an additional layer supported thereby, each of the flakes bears second indicia, the first and second indicia are discernible only with magnification, and the first indicia has an association with the second indicia for providing verification of the article.

### BRIEF DESCRIPTION OF THE DRAWINGS

The invention will be described in greater detail with reference to the accompanying drawings which represent preferred embodiments thereof, wherein:

Figure 1 is a schematic depiction of an article according with the instant invention;

Figure 2 is a magnified portion of the article shown in FIG. 1;

Figure 3 is a schematic cross section of the article shown in FIG. 1;

Figure 4 a schematic cross section of an article according to one embodiment of the instant invention;

Figure 5 is schematic depiction of an article according to one embodiment of the instant invention;

Figure 6 shows a direct image of the € symbol;

Figure 7 shows an inverse image of the € symbol formed by a surrounding diffractive region;

Figure 8 is a schematic cross section of an article according to one embodiment of the instant invention;

Figure 9 is a schematic cross section of an article according to one embodiment of the instant invention;

Figure 10 is a schematic cross section of a Chromagram according to one embodiment of the instant invention; and

Figure 11 is a schematic cross section of a Chromagram according to one embodiment of the instant invention.

### DETAILED DESCRIPTION

For the purpose of this application indicia are understood as one or more symbols selected from lettering, numbers, trademarks, logos, any language symbols, barcode, and the like. Also envisioned as indicia are symbolic images, such as a country's flag or playing card indicia. Of course, indicia are imaged by color or texture, for example by printing or stamping; however indicia are more than color or specific texture. Indicia are understood as visual sign that has acquired a conventional meaning.

According to this invention, a security feature to an article is provided by flakes bearing indicia associated with another indicia within the article. By way of example, the article has first indicia within a Chromagram hot-stamped thereto, and second indicia on flakes dispersed in color shifting ink printed on the article, and the first and second indicia impart the same image.

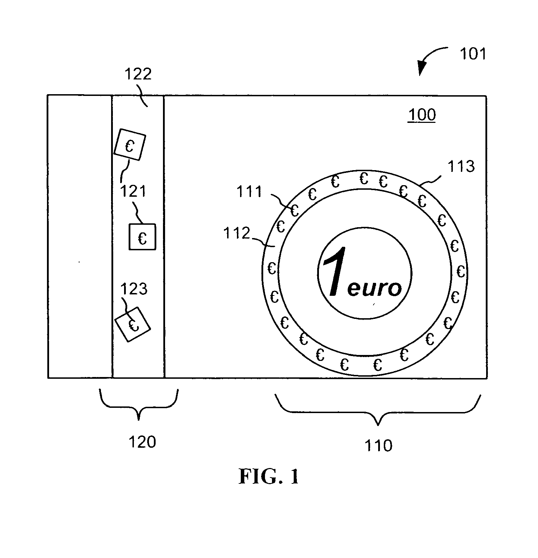

The association between the first and second indicia is understood as a relationship between images or symbols leading an observer to the conclusion that the first and second indicia "belong together", such as both indicia being the same symbol, logo, etc., notwithstanding optional differences in size, font, color, and sharpness, related to different rendering techniques and materials. By way of example discussed further in reference to FIG. 1, € symbols on flakes are associated with € symbols on a diffractive structure.

Alternatively, the first and second indicia are different symbols that are symbolic representations having the same connotation, such as "1" and "one", "love" and a heart shaped symbol. For example, a flake bearing the Canadian Flag is associated with the word "Canada".

Alternatively, the first and second indicia are different symbols that combine together to form a symbolic representation of a word or article. By way if example, the first indicia imparts a word missing one letter and the second indicia is the missing letter, such as "UNDERSTANDIN" and "G". Alternatively, the first indicia is an incomplete puzzle with one piece missing, and the second indicia is the missing piece.

Alternatively, the first and second indicia are inverse symbols, mutually supplying each other's lack or complement each other, for example as a lock and key images.

The instant invention provides a covert security feature using flakes bearing micro indicia that it is not discernible with an unaided human eye; magnification of approximately 100 times or more is required for the indicia to be seen. The micro indicia is an indicia having a diameter less than 200 microns and preferably less than 50 microns.

.The association between the first and second indicia is a covert security feature especially useful in the instance when articles or their parts are ferried between two manufacturing locations and may be stolen in the process. Authentication of the ready article requires magnification under a microscope or magnifying glass. In one embodiment, magnification and a particular filter or wavelength is required magnification.

In one embodiment of the instant invention, the article having the first and second indicia associated with one another, is a Chromagram. A conventional Chromagram brings together two forms of overt detection by optical thin film interference of a color-shifting ink and diffractive interference from the hologram in the same device. According to the instant invention, a new Chromagram device has matching covert features both on the diffractive foil structure and in the color-shifting ink, such as an embossed microstructure on the hologram and indicia-bearing flakes in the ink. This allows for layering security features in the same area and for double recognition for authentication and anti-counterfeiting purposes. Layering on this way, also allows for simpler holograms that are much easier to recognize by general public.

With reference to FIGs. 1 - 3, one embodiment of the instant invention will be described now. By way of example, an article 101 is a hologram with a Euro motive having grated € micro symbols. FIG. 1 shows a front surface of the article 101, by including two visually distinct regions. In a first region 110, a diffractive stricture 113 is supported by a substrate 100; an external ring portion 112 bears indicia in the form of grated € symbols 111. In a second region 120, the substrate 100 supports a coating 122 having one or more flakes 121 dispersed therein, and the flakes 121 bear € indicia 123. The diameter of the flakes 121 is between 3 microns and 200 microns,, in some embodiments the flakes are large enough to be discernable without magnification, however the indicia is visible only under magnification.

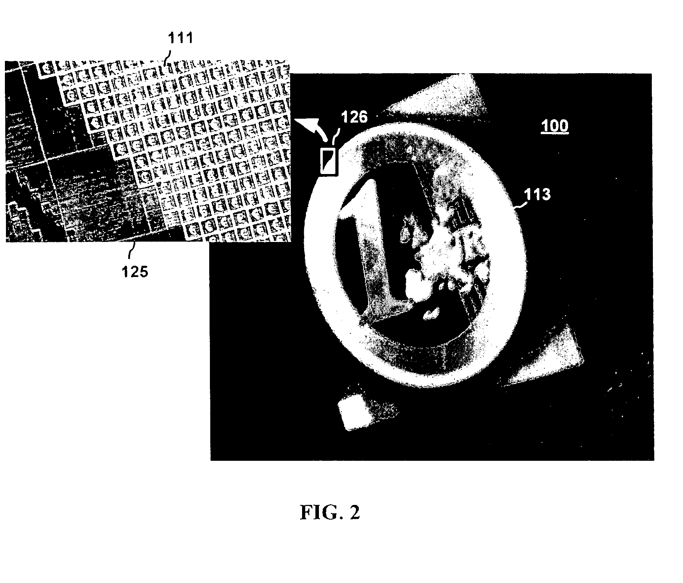

The indicia 111 and 123 are invisible to an unaided human eye due to their size, but can be detected using a magnifying glass or microscope. FIG. 2 shows a magnified image 125 of a border portion 126 of the diffractive stricture 113, so that the diffractive indicia 111 are discernible after magnification.

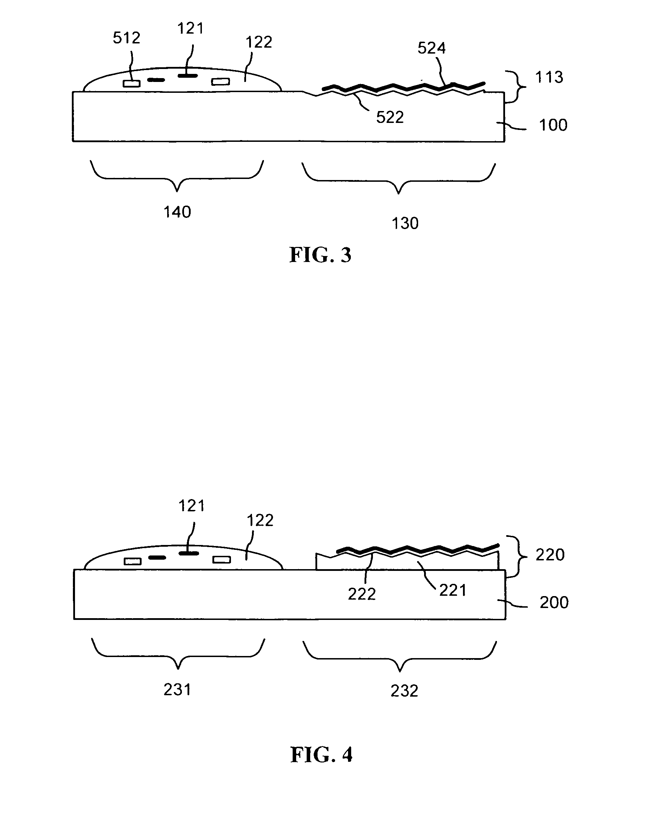

By way of example illustrated by FIG. 3, the diffractive structure 113 is formed by embossing the substrate 100 with a grated pattern 522 including € symbols 111, and the flakes 121 are made by vacuum deposition of a single or multilayer coating on a replication substrate embossed with the images 123 and separation the single or multilayer coating from the replication substrate into the flakes 121. Embossing of the substrate 100 and the replication substrate can be done by different technologies, such as diamond engraving, masking, direct laser writing, e-beam writing, laser interference, lithographic and holographic methods, etc.

The first indicia 111 and the second indicia 123 impart the same symbol €, but the indicia 123 on flake 121 can be obtained by a different technique that the indicia 111 of the ring 112, and therefore one of the indicia 123 and 111 would look sharper than another.

In addition and as an example, indicia 111 could be grated to create a diffractive ring 112.

Additionally, the first indicia 111 and the second indicia 123 may differ in size, still both being small enough to be invisible without magnification. However, an association between the first and second indicia would be easily realized by an observer using a microscope or a magnifying glass.

Additionally, FIG. 1 illustrates another type of the first indicia: a word "euro" within the diffractive structure 113. which has the same connotation as the "euro" symbols 123.

In reference to FIGs. 1-3, the first indicia are a part of the grated pattern 522. In general, diffraction gratings are essentially repetitive structures made of lines or grooves in a material to form a peak and trough structure. Desired optical effects within the visible spectrum occur when diffraction gratings have regularly spaced grooves in the range of hundreds to thousands of lines per millimeter on a reflective surface. The methods that can be used to form the surface relief pattern 522 are well known by those skilled in the art. For example, a surface of the substrate 100 may be embossed by well known methods, such as by pressing it in contact with a heated nickel embossing shim at high pressure. Other methods include photolithography and molding of the plastic substrate against a patterned surface.

In one method, the substrate 100 is a thermoplastic film that has been embossed by heat softening the surface of the film and then passing the film through embossing rollers that impart the diffraction grating or holographic image onto the softened surface. In this way, sheets of effectively unlimited length can be formed with the diffraction grating or holographic image thereon. Alternatively, optical structure 113 can be made by passing a roll of plastic film coated with an ultraviolet (UV) curable polymer, such as PMMA, through a set of UV transparent rollers whereby the rollers set a pattern into the UV curable polymer and the polymer is cured by a UV light that passes through the UV transparent rollers.

Optionally, the grated pattern 522 is coated with a material having reflectivity higher than 50%, preferably higher than 70%, for example aluminum, to form a reflective layer 524 about 5 - 200 nm thick, or with a high reflective index (HRI) layer, composed of a dielectric material having an index of refraction of about 1.65 or greater, such as ZnS, TiO₂, ZrO₂ materials, and thickness in the range of 10 to 200 nm. The reflective layer 524 is optionally demetallized to form a demetallized hologram, described, for example, in US Patents 5,314,767, 6,616,190, and 7,081,819. Demetallization can be done in different ways. The most common is vacuum coating the Al layer, follow by masking and etching. In another newer technology the Al layer can be deposited under vacuum only on desired areas.

FIG. 4 illustrates an embodiment resembling one described in reference to FIGs. 1- 3, however different in that an embossable resin layer 221 is supported by a substrate 200, a grated pattern 222 including € symbols 111 is embossed onto the resin layer 221 and possibly coated with one or more layers of other materials as taught in the above mentioned prior art thus forming a diffractive structure 220. The diffractive structure 220 is coated onto the substrate 200 or adhesively bonded thereto. By way of example, the article shown in FIG. 4 is a paper document, wherein the substrate 200 is a paper substrate.

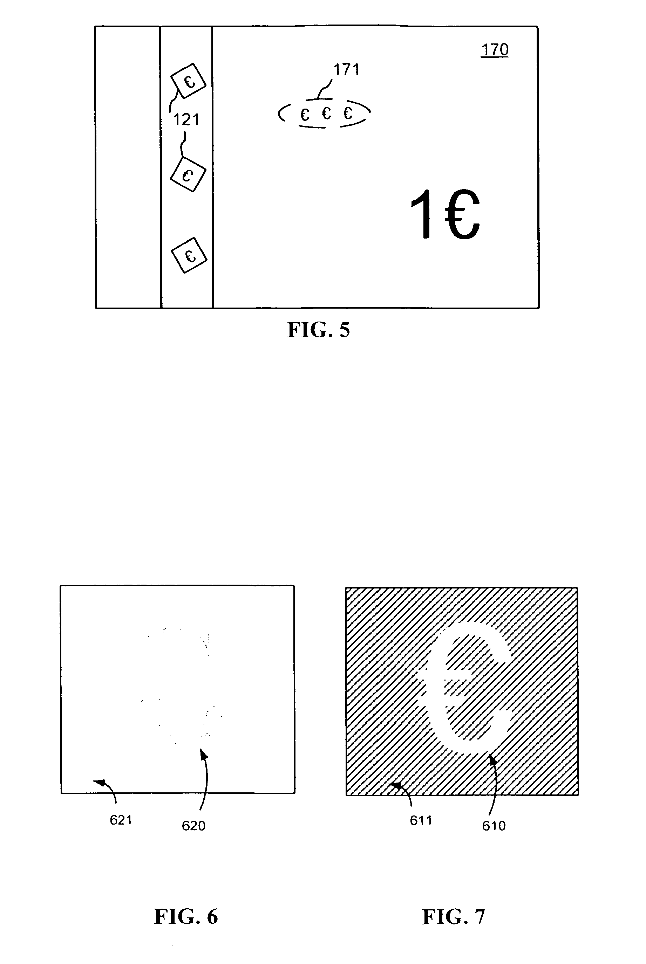

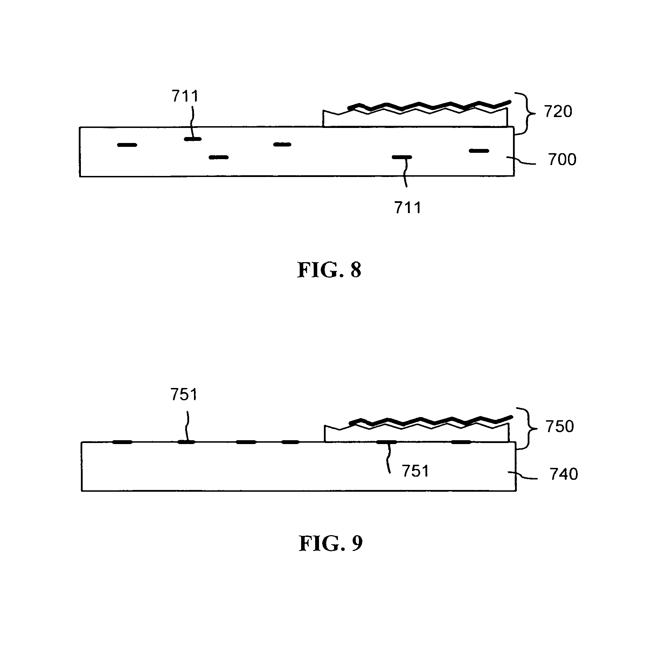

In one embodiment illustrated by FIG. 5, first indicia 171 is ink-printed either directly onto substrate 170 or onto an additional layer supported by the substrate, for example a background-colored layer, not shown, whereas flakes 121 bearing second indicia associated with the first indicia are supported by the substrate 160 or dispersed within the substrate 160 as discussed further with reference to FIG. 8.

Alternatively, the first indicia is imaged by demetallization of a reflective layer coated onto a substrate, such as the reflective layer 524, wherein the grating 522 is optional. The demetallized reflective layer may be within a Chromagram supported by the substrate. In one embodiment the demetallized reflective layer is a part of a color shifting foil having dielectric and absorber layers vacuum coated on the reflective layer, as described for example in the U.S. Patent Application 20070206249.

Alternatively, the first indicia is imaged by laser writing, as described for example in U.S. Patent Nos. 5,982,545 and 5,378,508.

Alternatively, the first indicia can be produced by one or a combination of a variety of different microstructuring technologies as diamond engraving, masking, e-beam writing, laser interference, dry etching, contact exposure, etc.

Additionally, more layers can be added to any structure bearing the first indicia described herein to form a Chromagram.

In one embodiment of the instant invention, the first indicia is a micro indicia discernible only with magnification of approximately 100 times or more.

When the first or second indicia are formed using one of the aforementioned techniques, it is either a direct or inverse image of the indicia imaged by embossing, demetallization, etching, ink-printing, stamping engraving, etc.; these technologies related to the fabrication of surface-relief elements are well known by the semiconductor and hologram industries. FIGs. 6 and 7 show a direct image 620 of the € symbol and an inverse image 610 of the same symbol, formed by a surrounding region 611. The regions 620 and 611 are regions of diffractive grating on the surface of the substrate or an additional layer supported by the substrate, or on each of the flakes.

In reference to FIG. 1, the flakes 121 can consist of one or more layers having a raised pattern of direct or inverse image of the second indicia 123, formed for example on an embossed base as taught in the U.S. Pat. 7,241,489. Alternatively, for imaging the second indicia 123 the same methods can be used as for the first indicia: demetallization, laser-writing, etching, stamping, or engraving a preflake sheet before sizing it into flakes or separating flakes from the base.

In one embodiment, the flakes 121 have both, diffractive grating and the indicia, wherein the indicia is imaged by direct laser writing. In another embodiment, a combination of a symbol (€) and a grating can be obtained by laser interference followed by a masking process.

In one embodiment, the ink composition 122 has covert pigment flakes 121 making up less than 1% of the total weight of pigment. Alternatively, as shown in FIG. 3, the covert pigments 121, even at higher concentrations, have an optical design similar to the rest of the pigments 512 that form the ink composition 122.

A direct or inverse image of the first indicia can be an ink-printed image, laser-written image, electron beam writing image, embossed image, etched image, stamped image, engraved image, painted image, and demetallized image, or a combination of such images. A direct or inverse image of the second indicia can be a laser-written image, electron beam writing image, embossed image, etched image, stamped image, engraved image, and demetallized image, or a combination of such images

In reference to FIG. 8, one embodiment of the instant invention has a transparent substrate 700 with incorporated indicia-bearing flakes 711 similar to flakes 121 shown in FIG. 1. A diffractive structure 720 is similar to the diffractive structure 220. However, any aforedescribed structure bearing the first indicia can be used in this embodiment in place of the structure 220, as far as the first indicia are associated with the second indicia on the flakes 711. Alternatively as shown in FIG. 9, the flakes 711 can be dispersed on the surface of the substrate 700, which, in this instance is not required to be transparent. By way of example, the flakes 711 are flowed and electro statically stick to the substrate prior to coating or adhesively bonding the structure bearing the first indicia.

Throughout this application, the substrate is understood to be any object in need of protection, or a part of such an object. In particular, the substrate can be made of paper, cardboard, or plastic; with the exception of the embodiment shown in FIG. 8, wherein a transparent substrate is required.

In one embodiment, the article of the instant invention is a Chromagram having a diffractive structure and a color shifting structure as taught in the U.S. Patent Applications Nos. 20070195392, 20060077496, and 20070058227. Additionally, the Chromagram has a first indicia imaged on the diffractive structure as described above, and a second indicia on flakes dispersed a the coating of color-shifting ink, wherein the first and second indicia are associated with one another as discussed above, for example impart the same symbols.

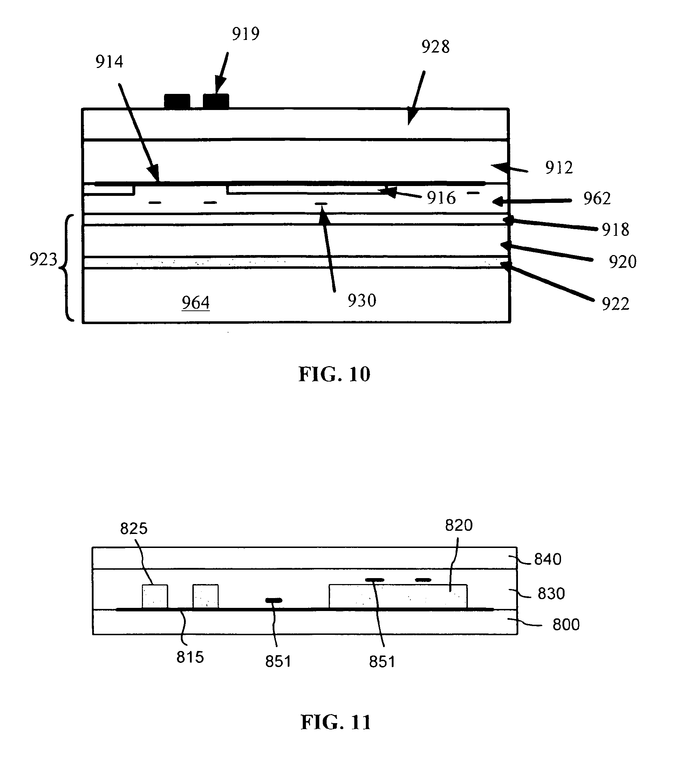

In the embodiment, the flakes bearing the second indicia are dispersed within the adhesive layer bonding two parts of a Chromagram: the diffractive structure and a color shifting foil, as taught in the U.S. Pat. Application No. 20070206249, wherein the flakes can be seen through a transparent window in the diffractive structure or the color shifting foil; and the first indicia are imaged on the either of the two parts using one of the aforedescribed techniques. In reference to FIG. 10, a substrate 964 is coated with a reflective layer 922, a dielectric layer 920 and an absorber layer 918 forming an optically variable color shifting foil 923. The substrate 912, which can be a resin/hardcoat layer, has a grating 914 thereon partially coated with a pattern of highly reflective coating 916 in contact with portions of the grating 914, for preventing light from passing therethrough. The resin layer 912 is optionally covered with protective light transmissive layer 928 with opaque indicia 919 printed.

FIG. 10 is the result of adhesively joining two optical structures together. Preferably, the grating 914 is embossed onto the substrate 912 and covered with the patterned demetallized aluminum 916, then the demet hologram is hot stamped or hot roll nipped to the optical stack using clear hot stamp adhesive 962 having flakes 930 bearing micro indicia dispersed therein and discernable through windows in reflective layer 916, where the substrate 912 is not covered with aluminum. The second indicia on the flakes 930 is associated in any way discussed above, with the first indicia 919 printed on the top of the protective layer 928, or on the substrate 912, or on the substrate 964. Alternatively, the first indicia is formed by a pattern in the reflective layers 916 or 922, or by the grating 914.

In one embodiment, the flakes bearing the second indicia are attached to a diffractive foil prior to vacuum coating a complete or partial Fabry-Perot design of a color shifting structure, for example the flakes flow and electrostatically stick to the foil. In reference to FIG. 11, the diffractive foil includes a substrate 800 embossed with a grating pattern 815 and coated with a demetallized reflective layer 820 having parts 825 imagining the first indicia, thereupon the flakes 851 are disposed. The resulting structure is coated with a dielectric layer 830 and an absorber layer 840 to form the color shifting Fabry-Perot structure, such as described for example in the U.S. Pat. No. 7,224,528. Alternatively, the first indicia is imaged by the grating pattern 815 and demetallization of the reflective layer 820 is optional.

In one embodiment of the present invention, the article bearing the first and second indicia is a Chromagram foil, for example having a three layers design of the type reflector /dielectric/absorber disposed behind the demetallized hologram. The first indicia is directly embossed on the hologram during the origination step, which is the fabrication of the surface relief microstructure, and is optionally demetallized. The embossing can be performed using different technologies, such as diamond engraving, masking, direct laser writing, e-beam writing, laser interference, lithographic and holographic methods, etc. The first indicia is easy to locate on the color shifting coated area of the Chromagram foil.

In one embodiment, color shifting flakes are printed begin the demetallized hologram.

To summarize, the indicia bearing flakes can be disposed under, relative to the substrate, the layer bearing the first indicia, as shown in FIG. 9; within the layer bearing the first indicia, for example within the embossable resin layer 221; or atop of the layer bearing the first indicia as shown in FIG. 11.

While the particular invention has been described with reference to illustrative embodiments, this description is not meant to be construed in a limiting sense. It is understood that although the present invention has been described, various modifications and combinations of the illustrative embodiments, as well as additional embodiments of the invention, will be apparent to one of ordinary skill in the art upon reference to this description without departing from the spirit of the invention, as recited in the claims appended hereto.

It is therefore contemplated that the appended claims will cover any such modifications or embodiments as fall within the true scope of the invention.

## Claims

1. An article comprising:
a substrate and
one or more flakes within or supported by the substrate;
**characterized in that**
the substrate has first indicia imaged directly thereon or on an additional layer supported thereby,
each of the one or more flakes bears second indicia discernible only with magnification, and
wherein the first and second indicia are the same symbols, or inverse symbols, or different symbols that are symbolic representations having the same connotation, or wherein the first and second indicia are different symbols that combine together to form a symbolic representation of a word or article.

2. An article defined in claim 1, wherein each of the one or more flakes comprises a layer having a raised pattern of direct or inverse image of the second indicia.

3. An article defined in claim 1 or 2, wherein a direct or inverse image of the first or second indicia is formed by one or more diffractive regions on the surface of the substrate or the additional layer, or on each of said flakes, respectively.

4. An article defined by any one of claims 1 to 3, comprising first and second regions on the surface thereof, wherein the first region is visually distinct from the second region, and the first indicia are visible under magnification in the first region and the second indicia are visible under magnification in the second region.

5. An article defined by any one of claims 1 to 4, wherein the substrate is transparent and the one or more flakes are disposed therewithin.

6. An article defined by any one of claims 1 to 5, including the additional layer, wherein the one or more flakes are under, within, or atop of the additional layer.

7. An article defined by any one of claims 1 to 6, wherein the first indicia are on a first side of the substrate and the second indicia are on a second side of the substrate, opposite to the first side.

8. An article as defined in any one of claims 1 to 7, wherein the first indicia is discernible only with magnification.

9. An article defined in any one of claims 1 to 8, including the additional layer, wherein the additional layer is one of: a background pigment layer, a protective coating, an embossable resin layer, a reflective layer, and a layer of a color shifting foil supported by the substrate.

10. An article defined in any one of claims 1 to 9, wherein the first and second indicia are the same symbols.

11. An article defined in any one of claims 1 to 9, wherein the first and second indicia are inverse symbols.

12. An article defined in any one of claims 1 to 9, wherein the first and second indicia are different symbols that are symbolic representations having the same connotation.

13. An article defined in any one of claims 1 to 9, wherein the first and second indicia are different symbols that combine together to form a symbolic representation of a word or article.

14. An article defined in any one of claims 1 to 13, wherein a direct or inverse image of the first indicia is one selected from the group of: an ink-printed image, laser-written image, electron beam writing image, embossed image, etched image, stamped image, engraved image, painted image, demetallized image, and a combination thereof.

15. An article defined in any one of claims 1 to 14, wherein a direct or inverse image of the second indicia is one selected from the group of: a laser-written image, electron beam writing image, embossed image, etched image, stamped image, engraved image, demetallized image, and a combination thereof
